# EUROPEAN PATENT SPECIFICATION

(11) **EP 2 787 036 B1**
(45) Date of publication and mention of the grant of the patent: **11.04.2018**
(21) Application number: 12853011.0
(22) Date of filing: 29.11.2012
(51) Int. Cl.: C08L 27/24, B29C 47/00, C08K 3/00, C08K 3/04, C08K 5/10, C08K 5/521, B29K 27/06

(54) **CHLORINATED VINYL CHLORIDE RESIN COMPOSITION FOR EXTRUSION MOLDING**
CHLORIERTE VINYLCHLORIDHARZZUSAMMENSETZUNG ZUM STRANGPRESSEN
COMPOSITION DE RÉSINE CHLORÉE DE CHLORURE DE VINYLE POUR LE MOULAGE PAR EXTRUSION

(30) Priority: 29.11.2011 JP 2011259719; 05.06.2012 JP 2012128463
(43) Date of publication of application: 08.10.2014
(73) Proprietor: Tokuyama Sekisui Co., Ltd., Osaka-shi Osaka 530-8565 (JP); Sekisui Chemical Co., Ltd., Osaka 530-8565 (JP)
(72) Inventor: YAMASUGI, Ryota, Shunan-shi, Yamaguchi 746 0006 (JP); NAKAZATO, Katsuhiro, Shunan-shi, Yamaguchi 746 0006 (JP); YANO, Hideaki, Hasuda-shi, Saitama 3490198 (JP); OTSUKA, Kenji, Hasuda-shi, Saitama 3490198 (JP); TONO, Masaki, Hasuda-shi, Saitama 3490198 (JP)
(74) Representative: Ter Meer Steinmeister & Partner
(86) International application number: PCT/JP2012/007689
(87) International publication number: WO 2013/080563

(56) References cited:
- WO-A1-99/60074
- CN-A- 1 880 062
- JP-A- H09 227 747
- JP-A- H09 309 990
- JP-A- S56 131 652
- JP-A- 2007 326 908
- JP-A- 2008 180 068
- US-A1- 2007 282 027
- Anonymous: "Triphenyl phosphate - Wikipedia", , 1 January 2016 (2016-01-01), XP55360157, Retrieved from the Internet: URL:https://en.wikipedia.org/wiki/Tripheny l_phosphate#cite_note-:1-4 [retrieved on 2017-03-29]

## Description

### TECHNICAL FIELD

The present invention relates to a chlorinated vinyl chloride resin composition for extrusion molding, for which a fire-resistant molded product, especially a long profile molded product can be produced by extrusion molding.

### BACKGROUND ART

A synthetic resin has good moldability and a product can be uniformly mass-produced from the synthetic resin. For this reason, the synthetic resin can be widely used as a building material. However, the synthetic resin is easily molten or burnt to produce gas or smoke. Therefore, a material having low smoking property and excellent fire resistance is required for safety during fire. In particular, for a sash of a door or a window, a material which has not only flame retardancy but also capacity to retain a shape thereof even during fire and prevent fire from reaching an outside (back) of the door or the window is required.

As a material responded to such a requirement, for example, "a polyvinyl chloride resin composition containing a plasticizer, a phosphorus compound, a neutralized thermally expandable graphite, and an inorganic filler in a polyvinyl chloride resin, wherein the content of the plasticizer is 20 to 200 parts by weight, the total content of the phosphorus compound and the neutralized thermally expandable graphite is 20 to 200 parts by weight, and the content of the inorganic filler is 30 to 500 parts by weight, relative to 100 parts by weight of the polyvinyl chloride resin, and the weight ratio of the neutralized thermally expandable graphite to the phosphorus compound is 9:1 to 1:9" (e.g., see Patent Document 1), "a chlorinated polyvinyl chloride resin composition having a chloride content of 60 to 71% by weight, containing a phosphorus compound, a neutralized thermally expandable graphite, and an inorganic filler, wherein the total content of the phosphorus compound and the neutralized thermally expandable graphite is 20 to 200 parts by weight, and the content of the inorganic filler is 30 to 500 parts by weight, relative to 100 parts by weight of the polyvinyl chloride resin having a chloride content of 60 to 71% by weight, and the weight ratio of the neutralized thermally expandable graphite to the phosphorus compound is 9:1 to 1:9" (e.g., see Patent Document 2), and the like have been proposed.

The polyvinyl chloride resin composition and the chlorinated polyvinyl chloride resin composition are capable of melt extrusion molding, and a molded product have excellent heat resistance. However, only a plate-shaped molded product can be obtained by long-time stable melt extrusion molding, and a profile molded product having a complicated cross-sectional shape like a sash cannot be obtained by long-time stable extrusion molding. Further, when the molded product obtained by molding polyvinyl chloride resin composition and the polyvinyl chloride resin composition is heated and burned, a foamed residue is left. In the case of use in a window sash, the foamed residue can retain a window glass. In the case of use for shielding a space, the foamed residue can shield the space and prevent fire from reaching an outside (back) of a door or a window. However, the residue may be easily broken by an impact applied from the outside since the residue has low mechanical strength (the residue hardness is low). Thus, there is a disadvantage such as a reduction in the effect.

### PRIOR ART DOCUMENTS

### PATENT DOCUMENTS

Patent Document 1: Japanese Patent Laid-Open Publication No. H10-95887
Patent Document 2: Japanese Patent Laid-Open Publication No. H9-227747
US 2007/0282027 A1 is directed to a thermally expandable vinyl chloride resin composition including 100 parts by mass of a vinyl chloride resin, 5 to 200 parts by mass of an inorganic filler, 10 to 300 parts by mass of a thermally expandable graphite, 0.1 to 10 parts by mass of a fluororesin and 10 to 300 parts by mass of a phosphorus compound.

### DISCLOSURE OF INVENTION

### PROBLEM TO BE SOLVED BY THE INVENTION

In view of the above-described problems, an object of the present invention is to provide a chlorinated vinyl chloride resin composition for extrusion molding, which can be stably extrusion-molded for an extended period to obtain a molded product, especially a long profile molded product having a complicated cross-sectional shape like a sash, is allowed to form a hard heat insulating layer having a high mechanical strength by expanding during heating a resulting molded product, and has excellent fire resistance.

### MEANS FOR SOLVING PROBLEM

The present invention provides [1] a chlorinated vinyl chloride resin composition for extrusion molding, which comprises 100 parts by weight of chlorinated vinyl chloride resin, 3 to 300 parts by weight of thermally expandable graphite, 3 to 200 parts by weight of inorganic filler, and 20 to 200 parts by weight of plasticizer, and does not contain a phosphorus compound excluding phosphate plasticizer, wherein the chlorine content falls within a range of 60 to 72% by weight according to claim 1.

### EFFECT OF THE INVENTION

The chlorinated vinyl chloride resin composition for extrusion molding of the present invention has a configuration described above, and can be stably extrusion-molded for an extended period to obtain a molded product, especially a profile molded product having a complicated cross-sectional shape like a sash. The chlorinated vinyl chloride resin composition is allowed to form a hard heat insulating layer having a high mechanical strength by expanding during heating a resulting molded product, and has excellent fire resistance.

### EMBODIMENTS TO CARRY OUT THE INVENTION

The chlorinated vinyl chloride resin composition for extrusion molding of the present invention contains 100 parts by weight of chlorinated vinyl chloride resin, 3 to 300 parts by weight of thermally expandable graphite, 3 to 200 parts by weight of inorganic filler, and 20 to 200 parts by weight of plasticizer, and does not contain a phosphorus compound (excluding phosphate ester plasticizer).

The chlorinated vinyl chloride resin is a chlorinated product of vinyl chloride resin, and falls within a range of 60 to 72% by weight. This is because a decrease in the chlorine content reduces the heat resistance and an increase in the chlorine content makes melt extrusion molding difficult.

The vinyl chloride resin is not particularly limited as long as it is any conventionally known optional vinyl chloride resin. Examples thereof may include a vinyl chloride homopolymer; a copolymer of a vinyl chloride monomer and a monomer having an unsaturated bond copolymerizable with the vinyl chloride monomer; and a graft copolymer, etc., obtained by graft copolymerization of vinyl chloride with a (co)polymer other than vinyl chloride. These resins may be used singly or in combination of two or more kinds thereof.

A monomer having an unsaturated bond copolymerizable with the vinyl chloride monomer is not particularly limited as long as it is copolymerizable with a vinyl chloride monomer. Examples thereof may include α-olefins such as ethylene, propylene, and butylene; vinyl esters such as vinyl acetate and vinyl propionate; vinyl ethers such as butyl vinyl ether and cetyl vinyl ether; (meth)acrylate esters such as methyl (meth)acrylate, ethyl (meth)acrylate, and butyl acrylate; aromatic vinyl such as styrene and α-methylstyrene; and N-substituted maleimides such as N-phenyl maleimide and N-cyclohexyl maleimide, etc. These monomers may be used singly or in combination of two or more kinds thereof.

A (co)polymer to be graft copolymerized with the vinyl chloride is not particularly limited as long as it can be graft (co)polymerized with vinyl chloride. Examples thereof may include an ethylene-vinyl acetate copolymer, an ethylene-vinyl acetate-carbon monoxide copolymer, an ethylene-ethyl acrylate copolymer, an ethylene-butyl acrylate-carbon monoxide copolymer, an ethylene-methyl methacrylate copolymer, an ethylene-propylene copolymer, an acrylonitrile-butadiene copolymer, polyurethane, chlorinated polyethylene, and chlorinated polypropylene, etc. These (co)polymers may be used singly or in combination of two or more kinds thereof.

The average degree of polymerization of the vinyl chloride resin is not particularly limited, and preferably falls within a range of 600 to 1,500. This is because a decrease in the average degree of polymerization reduces the mechanical physical properties of the molded product and an increase in the average degree of polymerization increases the melt viscosity to make melt extrusion molding difficult.

The thermally expandable graphite is a conventionally known substance, which is produced as a graphite intercalation compound by treating a powder of natural flaky graphite, thermally decomposing graphite, kish graphite, or the like, with an inorganic acid such as concentrated sulfuric acid, nitric acid, and selenic acid, and a strong oxidant such as concentrated nitric acid, perchloric acid, perchlorate, permanganate, dichromate, and hydrogen peroxide, that is, as a crystalline compound in which a carbon layer structure is maintained.

As the thermally expandable graphite, a thermally expandable graphite obtained by acid treatment may be neutralized with ammonia, lower aliphatic amine, an alkali metal compound, an alkaline earth metal compound, or the like.

Examples of the lower aliphatic amine may include monomethyl amine, dimethyl amine, trimethyl amine, ethyl amine, propyl amine, and butyl amine, etc. Examples of the alkali metal compound and the alkaline earth metal compound may include a hydroxide, an oxide, a carbonate, a sulfate, and an organic acid salt, etc., of potassium, sodium, calcium, barium, and magnesium, etc. Specific examples of the thermally expandable graphite may include "CA-60S" available from Nippon Kasei Chemical Co., Lit., etc.

When the grain size of the thermally expandable graphite is too small, the expansion degree of graphite decreases, and the foamability decreases. When it is too large, the expansion degree increases. In these respects, the thermally expandable graphite is effective. However, the thermally expandable graphite has low dispersibility during mixing with a resin, and therefore the moldability reduces. Further, the mechanical physical properties of a resulting extrusion molded product reduce. Therefore, the grain size of the thermally expandable graphite is preferably 20 to 200 mesh.

When the amount of the thermally expandable graphite to be added is small, the fire resistant performance and the foamability reduce. When it is large, extrusion molding is made difficult, the surface property of the resulting molded product is deteriorated, and the mechanical physical properties reduce. Therefore, the amount of the thermally expandable graphite to be added is 3 to 300 parts by weight relative to 100 parts by weight of the chlorinated vinyl chloride resin.

The amount preferably falls within a range of 10 to 200 parts by weight relative to 100 parts by weight of the chlorinated vinyl chloride resin.

The inorganic filler is not particularly limited as long as it is an inorganic filler generally used during production of vinyl chloride resin molded product. Examples thereof may include silica, diatomaceous earth, alumina, zinc oxide, titanium oxide, calcium oxide, magnesium oxide, ferric oxide, tin oxide, antimony oxide, ferrite, calcium hydroxide, magnesium hydroxide, aluminum hydroxide, basic magnesium carbonate, calcium carbonate, magnesium carbonate, zinc carbonate, barium carbonate, dawnnite, hydrotalcite, calcium sulfate, barium sulfate, gypsum fibers, calcium silicate, talc, clay, mica, montmorillonite, bentonite, activated clay, meerschaum, imogolite, sericite, glass fibers, glass beads, silica balloons, aluminum nitride, boron nitride, silicon nitride, carbon black, graphite, carbon fibers, carbon balloons, charcoal powder, various metal powders, potassium titanate, magnesium sulfate, lead zirconia titanate, aluminum borate, molybdenum sulfide, silicon carbide, stainless fibers, zinc borate, various magnetic powders, slag fibers, fly ash, and dewatered sludge, etc. Calcium carbonate and hydrous inorganic compounds such as calcium hydroxide, magnesium hydroxide, and aluminum hydroxide, which are dehydrated during heating, and have an endothermic effect, are preferred. Further, antimony oxide is preferred since it has an effect of improving flame retardant. These inorganic fillers may be used singly or in combination of two or more kinds thereof.

When the amount of the inorganic filler to be added is small, the fire resistant performance reduces. When it is large, extrusion molding is made difficult, the surface property of the resulting molded product is deteriorated, and the mechanical physical properties reduce. Therefore, the amount of the inorganic filler to be added is 3 to 200 parts by weight relative to 100 parts by weight of the chlorinated vinyl chloride resin.

The amount preferably falls within a range of 10 to 150 parts by weight relative to 100 parts by weight of the chlorinated vinyl chloride resin.

The plasticizer is not particularly limited as long as it can be generally used during production of vinyl chloride resin molded product. Examples thereof may include a phthalate ester plasticizer such as di-2-ethylhexyl phthalate (DOP), dibutyl phthalate (DBP), diheptyl phthalate (DHP), and diisodecyl phthalate (DIDP); a fatty acid ester plasticizer such as di-2-ethylhexyl adipate (DOA), diisobutyl adipate (DIBA), and dibutyl adipate (DBA); an epoxidized ester plasticizer such as an epoxidized soy bean oil; a polyester plasticizer such as adipic acid ester and adipic acid polyester; a trimellitate ester plasticizer such as tri-2-ethylhexyl trimellitate (TOTM) and triisononyl trimellitate (TINTM); and a phosphate ester plasticizer such as trimethyl phosphate (TMP) and triethyl phosphate (TEP). These plasticizers may be used singly or in combination of two or more kinds thereof.

When the amount of the plasticizer to be added is small, the extrusion moldability reduces. When it is large, the resulting molded product becomes too soft. Therefore, the amount of the plasticizer to be added is 20 to 200 parts by weight relative to 100 parts by weight of the chlorinated vinyl chloride resin.

When in the chlorinated vinyl chloride resin composition for extrusion molding of the present invention, the chlorine content is configured by a chlorinated vinyl chloride resin, thermally expandable graphite, an inorganic filler, and a plasticizer, but a phosphorus compound (excluding phosphate ester plasticizer) is contained, the extrusion moldability reduces. Therefore, the phosphorus compound (excluding phosphate ester plasticizer) must not be contained as described above. Provided that a phosphate ester plasticizer which is the plasticizer may be contained.

The phosphorus compound inhibiting the extrusion moldability is as follows: red phosphorus, various phosphate esters such as triphenyl phosphate, tricresyl phosphate, trixylenyl phosphate, cresyl diphenylphosphate, and xylenyl diphenylphosphate, metal salts of phosphorous acid such as sodium phosphate, potassium phosphate, and magnesium phosphate, ammonium polyphosphates, and compounds represented by the following formula. 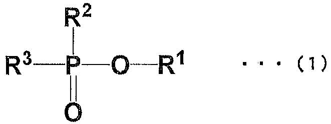 In the formula, R1 and R3 represents hydrogen, a linear or branched alkyl group having 1 to 16 carbon atoms, or an aryl group having 6 to 16 carbon atoms.

R2 represents a hydroxyl group, a linear or branched alkyl group having 1 to 16 carbon atoms, a linear or branched alkoxyl group having 1 to 16 carbon atoms, an aryl group having 6 to 16 carbon atoms, or an aryloxy group having 6 to 16 carbon atoms.

Examples of the compound represented by the above-described formula may include methylphosphonic acid, dimethyl methylphosphate, diethyl methylphosphate, ethylphosphonic acid, propylphosphonic acid, butylphosphonic acid, 2-methylpropylphosphonic acid, tert-butylphosphonic acid, 2,3-dimethyl-butylphosphonic acid, octylphosphonic acid, phenylphosphonic acid, dioctylphenylphosphonate, dimethylphosphinic acid, methylethylphosphinic acid, methylpropylphosphinic acid, diethylphosphinic acid, dioctylphosphinic acid, phenylphosphinic acid, diethylphenylphosphinic acid, diphenylphosphinic acid, and bis(4-methoxyphenyl)phosphinic acid, etc.

Examples of ammonium polyphosphate may include, but are not particularly limited to, ammonium polyphosphate and melamine-modified ammonium polyphosphate, etc.

In the present invention, these phosphorus compounds inhibiting extrusion moldability are not used.

To the chlorinated vinyl chloride resin composition of the present invention, a heat stabilizer, a lubricant, a process aid, a thermally decomposing foaming agent, an antioxidant, an antistatic agent, and a pigment, etc., which are generally used during thermal molding of a vinyl chloride resin composition, other than a phosphorus compound, may be added, if necessary, within a range not impairing the physical properties.

Examples of the heat stabilizer may include a lead heat stabilizer such as tribasic lead sulfate, tribasic lead sulfite, dibasic lead phosphite, lead stearate, and dibasic lead stearate; an organic tin heat stabilizer such as organic tin mercapto, organic tin malate, organic tin laurate, and dibutyl tin malate; and a metal soap heat stabilizer such as zinc stearate and calcium stearate, etc. These heat stabilizers may be used singly or in combination of two or more kinds thereof.

Examples of the lubricant may include a wax such as polyethylene, paraffin, and montanic acid; various ester waxes; an organic acid such as stearic acid and ricinoleic acid; organic alcohol such as stearyl alcohol; and an amido compound such as dimethyl bisamide, etc. These heat lubricants may be used singly or in combination of two or more kinds thereof.

Examples of the process aid may include chlorinated polyethylene, a methyl methacrylate-ethyl acrylate copolymer, and poly(methyl methacrylate) having a high molecular weight, etc.

Examples of the thermally decomposing foaming agent may include azodicarbonamide (ADCA), dinitrosopentamethylenetetramine (DPT), p,p-oxybis(benzenesulfonyl hydrazide) (OBSH), and azobisisobutyronitrile (AIBN).

The chlorinated vinyl chloride resin composition of the present invention is a chlorinated vinyl chloride resin composition for extrusion molding. In accordance with a conventional method, a long molded product can be obtained by melt extrusion at 130 to 170°C using an extruder such as a single-screw extruder and a twin-screw extruder, etc. In particular, the chlorinated vinyl chloride resin composition of the present invention has excellent moldability, and therefore a long profile molded product having a complicated cross-sectional shape like a sash can be easily obtained.

### EXAMPLE

Hereinafter, Examples of the present invention will be described, but the present invention is not limited to the Examples.

### Examples 1 to 4 and Comparative Examples 1 to 6

A mixture of a chlorinated vinyl chloride resin ("HA-53K" available from TOKUYAMA SEKISUI CO.,LTD., polymerization degree: 1,000, chlorine content: 67.3% by weight, hereinafter referred to as "CPVC-1"), another chlorinated vinyl chloride resin ("HA-53F" available from TOKUYAMA SEKISUI CO.,LTD., polymerization degree: 1,000, chlorine content: 64.0% by weight, hereinafter referred to as "CPVC-2"), a vinyl chloride resin ("TS-1000R" available from TOKUYAMA SEKISUI CO.,LTD., polymerization degree: 1,000, hereinafter referred to as "PVC"), a thermally expandable graphite neutralized ("GREP-EG" available from TOSOH CORPORATION), calcium carbonate ("WHITON BF300" available from SHIRAISHI CALCIUM KAISHA, LTD.), antimony trioxide ("PATOX-C" available from Nihon Seiko Co., Ltd.), diisodecyl phthalate ("DIDP" available from J-PLUS Co., Ltd., hereinafter referred to as "DIDP"), ammonium polyphosphate ("AP422" available from Clariant(Japan)K.K.), a Ca-Zn composite stabilizer ("NT-231" available from MIZUSAWA INDUSTRIAL CHEMICALS, LTD.), calcium stearate ("SC-100" available from SAKAI CHEMICAL INDUSTRY CO., LTD.), chlorinated polyethylene ("135A" available from Weihai Jinhong Chemical Industry Co., Ltd.), and poly(methyl methacrylate) ("P-530A" available from MITSUBISHI RAYON CO.,LTD.), in amounts shown in Table 1, was supplied to a single-screw extruder (a 65-mm extruder manufactured by Ikegai Corp.), and subjected to extrusion molding at a rate of 1 m/hr for 2 hours to produce a long profile molded product of which the cross-sectional shape at 150°C is an E shape (a shape having a base which has a width of 100 mm a thickness of 3.0 mm and 3 side walls which are perpendicularly set to the base at each distance of 50 mm away from the both ends and middle of the base, and each have a thickness of 2.0 mm).

### Moldability

In Examples 1 to 4 and Comparative Example 1, a long profile molded product having a fine surface was obtained by extrusion molding for 2 hours. Therefore, an extrusion time in Table 1 is 2 hours. In Comparative Examples 2 to 6, a long profile molded product having a fine surface only immediately after extrusion was obtained by extrusion molding. However, the mixture was gradually attached to a screw of the extruder and a mold, and the surface was roughened. Further, the extrusion molded product was meandered, and as a result, the extrusion was not performed. The extrusion time in Table 1 is a time which the extrusion cannot be performed.

Further, after extrusion molding was completed for 2 hours in Examples 1 to 4 and Comparative Example 1, and after extrusion molding was not performed in Comparative Examples 2 to 6, the extruder was disassembled, and a state where the mixture was attached to the screw of the extruder and the mold was observed. The results are shown in Table 1. In the results, a case where the mixture is not attached is evaluated as o, and a case where the mixture is attached is evaluated as ×.

The fire resistance, the expansion rate, the residue hardness, and the residue shape retention of the molded product, and the oxygen index were measured. The results are shown in Table 1. A measurement method was as follows.

### Fire Resistance

Measurement was performed at a radiant heat quantity of 35 kW/m² using a fire-resistant cone calorimeter ("CONE2A" manufactured by Atlas). In an evaluation method, the above-described heat quantity was applied to a specimen (length: 100 mm, width: 100 mm, thickness: 3.0 mm) prepared from the molded product for 30 minutes, a case where the temperature of the back surface of the specimen (the front surface was heated) is 260°C or lower is evaluated as o, and a case where the temperature is higher than 260°C was evaluated as ×.

### Expansion Rate

A specimen (length: 100 mm, width: 100 mm, thickness: 2.0 mm) prepared from the molded product was placed in an electric furnace, and heated at 600°C for 30 minutes. The thickness of the specimen was measured, and (the thickness of the specimen after heating)/(the thickness of the specimen before heating) was calculated as the expansion rate.

### Residue Hardness

The heated specimen after the measurement of expansion rate was placed in a compression tester ("Finger Feeling Tester" manufactured by KATO TECH CO., LTD.), and compressed with an indenter of 0.25 cm2 at a speed of 0.1 cm/s, and the stress at a break point was measured. However, in Comparative Example 6, the residue hardness was too low, and therefore the stress at break did not exist and could not be measured.

### Residue Shape Retention

The residue hardness is an indication of hardness of residue after expansion. However, the measurement of residue hardness is restricted to a front surface part of the residue, and therefore, the residue hardness may not be an indication of hardness of whole residue. Accordingly, the residue shape retention was measured as the indication of hardness of whole residue. The both ends of the heated specimen after the measurement of expansion rate were lifted by hand, and at this time, the brittleness of the residue was measured visually as the residue shape retention. A case where the specimen is lifted without collapsing is evaluated as o, a case where the specimen is lifted but partially collapsed is evaluated as Δ, and a case where the specimen is collapsed and not lifted is evaluated as ×.

### Oxygen Index

The oxygen index was measured using a specimen (length: 140 mm, width: 54 mm, thickness: 1.0 mm) prepared from the molded product in accordance with JIS K 7201.

**Table 1**

| | | Example | | | | Comparative Example | | | | | |
|---|---|---|---|---|---|---|---|---|---|---|---|
| | | 1 | 2 | 3 | 4 | 1 | 2 | 3 | 4 | 5 | 6 |
| Mixture | CPVC-1 | 100 | | | | | | 100 | 100 | 100 | 100 |
| | CPVC-2 | | 100 | 100 | 100 | | | | | | |
| | PVC | | | | | 100 | 100 | | | | |
| | Neutralized Thermally Expandable Graphite | 48 | 48 | 53 | 52 | 48 | 54 | 48 | 48 | 10 | 180 |
| | Calcium Carbonate | 24 | 24 | 27 | 27 | 24 | 27 | 24 | 24 | 62 | 20 |
| | Antimony T rioxide | | | 10 | 5 | | | | | | |
| | DIDP | 80 | 80 | 88 | 86 | 80 | 80 | | 80 | 80 | 120 |
| | Ammonium Polyphosphate | | | | | | 27 | 24 | 24 | 24 | 24 |
| | Ca-Zn Composite Stabilizer | 3 | 3 | 3 | 3 | 3 | 3 | 3 | 3 | 3 | 3 |
| | Calcium Stearate | 4.5 | 4.5 | 4.5 | 4.5 | 4.5 | 4.5 | 4.5 | 4.5 | 4.5 | 4.5 |
| | Chlorinated Polyethylene | 10 | 10 | 10 | 10 | 10 | 10 | 10 | 10 | 10 | 10 |
| | Polymethyl Methacrylate | 20 | 20 | 20 | 20 | 20 | 20 | 20 | 20 | 20 | 20 |
| Moldability | Extrusion Time | 2hours | 2hours | 2hours | 2hours | 2hours | 30minutes | 30minutes | 30minutes | 30minutes | 20minutes |
| | State Where the Mixture was Attached to the Screw | ○ | ○ | ○ | ○ | ○ | × | × | × | × | × |
| | State Where the Mixture was Attached to the Mold | ○ | ○ | ○ | ○ | ○ | × | × | × | × | × |
| Propertiy | Fire Resistance | ○ | ○ | ○ | ○ | ○ | ○ | ○ | ○ | × | ○ |
| | Expansion Rate | 16.2 | 14.5 | 14.9 | 14.1 | 17.7 | 17.9 | 17.3 | 12.5 | 3.9 | 68.2 |
| | Residue Hardness | 0.47 | 0.44 | 0.09 | 0.13 | 0.23 | 0.18 | 0 | 0.6 | 0.56 | - |
| | Residue Shape Retention | ○ | ○ | ○ | ○ | × | Δ | ○ | Δ | ○ | x |
| | Oxygen Index | 25.4 | 27.2 | 32.5 | 30.0 | - | - | - | - | - | - |

### INDUSTRIAL APPLICABILITY

The chlorinated vinyl chloride resin composition for extrusion molding of the present invention is allowed to easily obtain a long profile molded product, and the long profile molded product by extrusion molding can be suitably used in an architecture field.

## Claims

1. A chlorinated vinyl chloride resin composition for extrusion molding, which comprises 100 parts by weight of chlorinated vinyl chloride resin, 3 to 300 parts by weight of thermally expandable graphite, 3 to 200 parts by weight of inorganic filler, and 20 to 200 parts by weight of plasticizer, and does not contain a phosphorus compound excluding phosphate plasticizer, wherein the chlorine content falls within a range of 60 to 72% by weight,
wherein the phosphorus compound is selected from phosphate esters such as triphenyl phosphate, tricresyl phosphate, trixylenyl phosphate, cresyl diphenylphosphate, and xylenyl diphenylphosphate, metal salts of phosphorous acid such as sodium phosphate, potassium phosphate, and magnesium phosphate, ammonium polyphosphates such as ammonium polyphosphate and melamine-modified ammonium polyphosphate, and compounds represented by the following formula 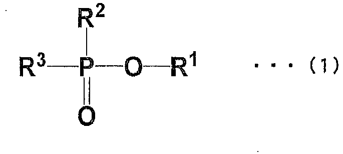
wherein R1 and R3 represents hydrogen, a linear or branched alkyl group having 1 to 16 carbon atoms, or an aryl group having 6 to 16 carbon atoms,
R2 represents a hydroxyl group, a linear or branched alkyl group having 1 to 16 carbon atoms, a linear or branched alkoxyl group having 1 to 16 carbon atoms, an aryl group having 6 to 16 carbon atoms, or an aryloxy group having 6 to 16 carbon atoms,
such as methylphosphonic acid, dimethyl methylphosphate, diethyl methylphosphate, ethylphosphonic acid, propylphosphonic acid, butylphosphonic acid, 2-methylpropylphosphonic acid, tert-butylphosphonic acid, 2,3-dimethyl-butylphosphonic acid, octylphosphonic acid, phenylphosphonic acid, dioctylphenylphosphonate, dimethylphosphinic acid, methylethylphosphinic acid, methylpropylphosphinic acid, diethylphosphinic acid, dioctylphosphinic acid, phenylphosphinic acid, diethylphenylphosphinic acid, diphenylphosphinic acid, and bis(4-methoxyphenyl)phosphinic acid,
wherein the phosphate plasticizer is trimethyl phosphate or triethyl phosphate.

## Patentansprüche

1. Chlorierte Vinylchloridharzzusammensetzung zum Strangpressen, welche 100 Gewichtsteile chloriertes Vinylchloridharz, 3 bis 300 Gewichtsteile thermisch expandierbaren Graphit, 3 bis 200 Gewichtsteile anorganischen Füllstoff und 20 bis 200 Gewichtsteile Weichmacher enthält und keine Phosphorverbindung enthält, ausgenommen Phosphat-Weichmacher, wobei der Chlorgehalt innerhalb eines Bereichs von 60 bis 72 Gew.-% fällt, wobei die Phosphorverbindung gewählt ist aus Phosphatestern, wie Triphenylphosphat, Tricresylphosphat, Trixylenylphosphat, Cresyldiphenylphosphat und Xylenyldiphenylphosphat, Metallsalzen von Phosphorsäure, wie Natriumphosphat, Kaliumphosphat und Magnesiumphosphat, Ammoniumpolyphosphaten, wie Ammoniumpolyphosphat und Melaminmodifiziertes Ammoniumpolyphosphat, und Verbindungen, wiedergegeben durch die folgende Formel 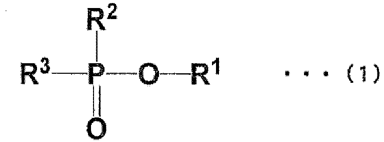
worin R1 und R3 Wasserstoff, eine lineare oder verzweigte Alkylgruppe mit 1 bis 16 Kohlenstoffatomen oder eine Arylgruppe mit 6 bis 16 Kohlenstoffatomen bedeuten,
R2 eine Hydroxylgruppe, eine lineare oder verzweigte Alkylgruppe mit 1 bis 16 Kohlenstoffatomen, eine lineare oder verzweigte Alkoxylgruppe mit 1 bis 16 Kohlenstoffatomen, eine Arylgruppe mit 6 bis 16 Kohlenstoffatomen oder eine Aryloxygruppe mit 6 bis 16 Kohlenstoffatomen bedeutet,
wie Methylphosphonsäure, Dimethylmethylphosphat, Diethylmethylphosphat, Ethylphosphonsäure, Propylphosphonsäure, Butylphosphonsäure, 2-Methylpropylphosphonsäure, tert-Butylphosphonsäure, 2,3-Dimethyl-butylphosphonsäure, Octylphosphonsäure, Phenylphosphonsäure, Dioctylphenylphosphonat, Dimethylphosphinsäure, Methylethylphosphinsäure, Methylpropylphosphinsäure, Diethylphosphinsäure, Di-octylphosphinsäure, Phenylphosphinsäure, Diethylphenylphosphinsäure, Diphenylphosphinsäure und Bis(4-methoxyphenyl)phosphinsäure,
wobei der Phosphat-Weichmacher Trimethylphosphat oder Triethylphosphat ist.

## Revendications

1. Une composition de résine de chlorure de vinyle chlorée pour le moulage par extrusion, qui comprend 100 parties en poids de résine de chlorure de vinyle chlorée, 3 à 300 parties en poids de graphite thermiquement expansible, 3 à 200 parties en poids de charge inorganique et 20 à 200 parties poids de plastifiant, et qui ne contient pas de composé de phosphore à l'exclusion de plastifiant de phosphate, dans laquelle la teneur en chlore est comprise dans l'intervalle de 60 à 72% en poids,
dans lequel le composé de phosphore et choisi parmi les esters de phosphate tel que le phosphate de triphényle, le phosphate de tricrésyl, le phosphate de trixylényl, le crésyl-diphénylphosphate et le xylényl-diphénylphosphate, les sels métalliques de l'acide phosphoreux tels que le phosphate de sodium, le phosphate de potassium et le phosphate de magnésium, les polyphosphates d'ammonium tel que le polyphosphate d'ammonium et le polyphosphate d'ammonium modifié par la mélamine, et les composés représentés par la formule suivante 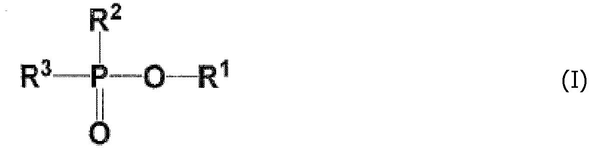
dans laquelle R1 et R3 représentent un atome d'hydrogène, un groupe alkyle linéaire ou ramifié ayant de 1 à 16 atomes de carbone, ou un groupe aryle ayant de 6 à 16 atomes de carbone,
R2 représente un groupe hydroxyle, un groupe alkyle linéaire ou ramifié ayant 1 à 16 atomes de carbone, un groupe alcoxyl linéaire ou ramifié ayant 1 à 16 atomes de carbone, un groupe aryle ayant 6 à 16 atomes de carbone, ou un groupe aryloxy ayant 6 à 16 atomes de carbone
tel que l'acide méthylphosphonique, le diméthylméthylphosphate, le diéthylméthylphosphate, l'acide éthylphosphonique, l'acide propylphosphonique, l'acide butylphosphonique, l'acide 2-méthylpropylphosphonique, l'acide tert-butylphosphonique, l'acide 2,3-diméthylbutylphosphonique, l'acide octylphosphonique, l'acide phénylphosphonique, le dioctylphénylphosphonate, l'acide diméthylphosphinique, l'acide méthyléthylphosphinique, l'acide méthylpropylphosphinique, l'acide diéthylphosphinique, l'acide dioctylphosphinique, l'acide phénylphosphinique, l'acide diéthylphénylphosphinique, l'acide diphénylphosphinique et l'acide bis(4-méthoxyphényl)phosphinique,
dans laquelle le plastifiant de phosphate est du phosphate de triméthyle ou du phosphate de triéthyle.
